## Europäisches Patentamt
## European Patent Office
## Office européen des brevets

(19)

(11) Veröffentlichungsnummer: **0 192 836**
**A2**

(12) **EUROPÄISCHE PATENTANMELDUNG**

(21) Anmeldenummer: **85115584.6**

(22) Anmeldetag: **07.12.85**

(51) Int. Cl.⁴: **F 16 C 39/06**

(30) Priorität: **01.03.85 CH 932/85**

(43) Veröffentlichungstag der Anmeldung:
**03.09.86 Patentblatt 86/36**

(84) Benannte Vertragsstaaten:
**CH DE FR GB IT LI**

(71) Anmelder: **MASCHINENFABRIK RIETER AG**
**Postfach 290**
**CH-8406 Winterthur(CH)**

(72) Erfinder: **Graf, Felix**
**Wylandstrasse 12**
**CH-8400 Wintherthur(CH)**

(72) Erfinder: **Wirz, Armin**
**im Grund**
**CH-8475 Ossingen(CH)**

(72) Erfinder: **Mutter, Heinz**
**Anton Graffstrasse 40**
**CH-8400 Winterthur(CH)**

(54) Verwendung einer magnetischen Lageranordnung.

(57) Die vorliegende Erfindung bezieht sich auf die Verwendung einer steuerbaren, magnetischen Lageranordnung 18 mit einer rotierbaren Welle 11 und einer elektronischen Steuerschaltung 31, mittels welcher die Welle 11 in der Lageranordnung 18 durch gesteuerte Magnete 23, 24 schwebend gelagert und in ihrer Steifigkeit regelbar ist. Gemäss der Erfindung wird die Welle 11 in einer Aufspulvorrichtung für den Spinnereibetrieb als Spulenträgerwelle 11 verwendet, wobei diese zum Zwecke des axialen Auswechselns von Hülsen und Spulen 12 ein freistehendes Ende hat.

. Es ergeben sich mit dieser Anordnung die Vorteile einer sehr hohen Rotationsgeschwindigkeit und die Möglichkeit, die Steifigkeit der Welle und damit die kritischen Drehzahlen verlagern zu können. Die kritischen Drehzahlen können gefahrlos durchfahren werden.

EP 0 192 836 A2

./...

Fig.1

- 1 -

<u>Verwendung einer magnetischen Lageranordnung</u>

Die vorliegende Erfindung bezieht sich auf die Verwendung einer magnetischen Lageranordnung gemäss dem Oberbegriff des Patentanspruchs 1.

Durch einen Prospekt der Firma Société de Méchanique Magnétique, BP 431, 27204 Vernon Cedex, Frankreich, ist ein steuerbares, magnetisches Lager unter der Marke "ACTIDYNE" bekannt gemacht. Dieses erlaubt bei veränderlichen Drehzahlen der im Lager gelagerten Rotationswelle ein Durchfahren durch die kritischen Drehzahlwerte, ohne dass dabei gefährliche Resonanzschwingungen auftreten. Dabei liegt eine schwebende Lagerung der Welle vor.

Im Spinnereibetrieb sind Aufspulvorrichtungen bekannt, bei denen sich eine Mehrzahl von Spulen auf einer Trägerwelle befinden und gleichzeitig bewickelt werden. Wenn die Spulen dabei ihren voll bespulten Zustand erreichen, kann das Gewicht jeder einzelnen Spule über 20 kg betragen. Dabei ist es erwünscht, die Aufwickelgeschwindigkeit während des Bespulens in der Weise zu wählen, dass auf jeder Spule pro Minute bis zu 6000 Meter Faden aufgewickelt werden.

Diese hohen Anforderungen können mit den bis heute verwendeten Mitteln nicht oder nur in ungenügendem Mass erfüllt werden. Zu den Schwierigkeiten gehört die vom Gewicht der Spulen abhängige Durchbiegung der Spulenträgerwelle, insbesondere jedoch das Vorhandensein kritischer Rotationsgeschwindigkeiten bzw. Drehzahlen verschiedener Ordnung der Spulenträgerwelle.

Diese kritischen Drehzahlen werden durch das Auftreten von Resonanz-Eigenschwingungen verursacht. Dadurch kann die Welle zerbrechen, was bei den hohen Rotationsgeschwindigkeiten und dem Gewicht der Spulen äusserst gefährlich sein kann.

Man ist bestrebt, die heute verwendeten Aufspulmaschinen, wie beispielsweise die in der schweizerischen Patentanmeldung Nr. 6408/79-7 Gezeigte, den Spinnmaschinen anzupassen, indem die von diesen gelieferten Fäden unter Anpassen der Rotationsgeschwindigkeit der Spulen unmittelbar auf diese aufgewickelt werden. Dabei ist ein fortwährendes Anpassen an die sich dauernd zunehmenden Gewichte der Spulen und an die dauernde Abnahme der Rotationsgeschwindigkeit während des Aufwickelns notwendig, wobei ein Arbeiten in oder nahe der kritischen Drehzahlen sich zwangsweise ergeben kann. Wegen der erwähnten, grossen Gefährlichkeit beim Arbeiten im Bereich der kritischen Drehzahlen ist eine solche Arbeitsweise jedoch nicht zu verantworten. Somit können die optimalen Drehzahlen bei bestimmten, sich bei den erwähnten, dauernden Veränderungen not-

0192836

wendigerweise ergebenden Bedingungen nicht eingehalten und damit kann die Spinnanlage nicht in ihrer vollen Kapazität ausgenützt werden.

Diese Nachteile sollen gemäss vorliegender Erfindung vermieden werden. Diese ist Gegenstand der im kennzeichnenden Teil des Anspruchs 1 angegebenen Merkmale.

Es ergibt sich gemäss der Erfindung der zusätzliche Vorteil, dass die Rotation der Welle reibungslos vor sich geht. Damit braucht diese keine Lagerschmierung.

Dies ist bei Textilien stets von besonderer Wichtigkeit, weil eine Verschmutzung derselben nicht toleriert werden kann. Der Hauptvorteil der Erfindung liegt jedoch darin, dass durch die Regulierung der Stärke der Magnetisierung der Welle sich deren Steifigkeit und die Dämpfung der Schwingungen derselben in einer Weise einstellen lassen, dass nie bei einer kritischen Drehzahl oder in deren unmittelbaren Nähe gespult werden muss. Durchfahrten durch kritische Drehzahlen können ausreguliert werden. Mit anderen Worten, im Falle man zu einer kritischen Drehzahl gelangt, kann durch ein mit dem Verändern der Drehzahl der Spulenträgerwelle gleichzeitiges Verändern der Steifigkeit dieser Welle die Durchfahrt durch die kritische Drehzahl sehr kurzzeitig gemacht werden, so dass ein durch Resonanz bedingtes Aufschaukeln von Schwingungen sich praktisch nicht ausbildet. Es ist somit eine vollständige Anpassung an eine Spinnanlage, an die verschiedenen, vorkommenden Zustände der Spulen und an verschiedenartige Fäden bezüglich Material und Dichte, d.h. an verschiedene Spulengewichte, möglich. Dies ist für einen Spinnereibetrieb von ausschlaggebendem Vorteil. Die verschiedenen Spulengewichte bewirken nämlich unterschiedliche Durchbiegungen der Spulenträgerwelle und veränderte kritische Drehzahlen. Auf dem Gebiet der Spulerei ist daher die Verwendung eines regelbaren, elektromagnetischen Lagers von ganz spezifischem Vorteil.

In diesem Zusammenhang sei der Vollständigkeit halber erwähnt, dass die Materialdichte in Kreuzspulen die Werte 0,35 bis 0,55 g/cm3 für texturierte Garne und 0,7 bis 0,95 g/cm3 für glatte Garne aufweisen kann. Diese Werte sind z.B. von der Fadenspannung, dem Kreuzungswinkel oder der Garnnummer abhängig. Im allgemeinen hat man daher mit zwischen ungefähr 0,3 und 1,0 g/cm3 liegenden Werten und daher mit grossen Unterschieden, zu rechnen.

Die Erfindung sei nun anhand von Ausführungsbeispielen und der Figuren der Zeichnung näher erläutert. In der letzteren ist

Fig. 1    eine schematische Darstellung einer erfindungsgemässen Aufspulvorrichtung von oben gesehen und

Fig. 2    eine schematische Darstellung einer weiteren Ausführungsform.

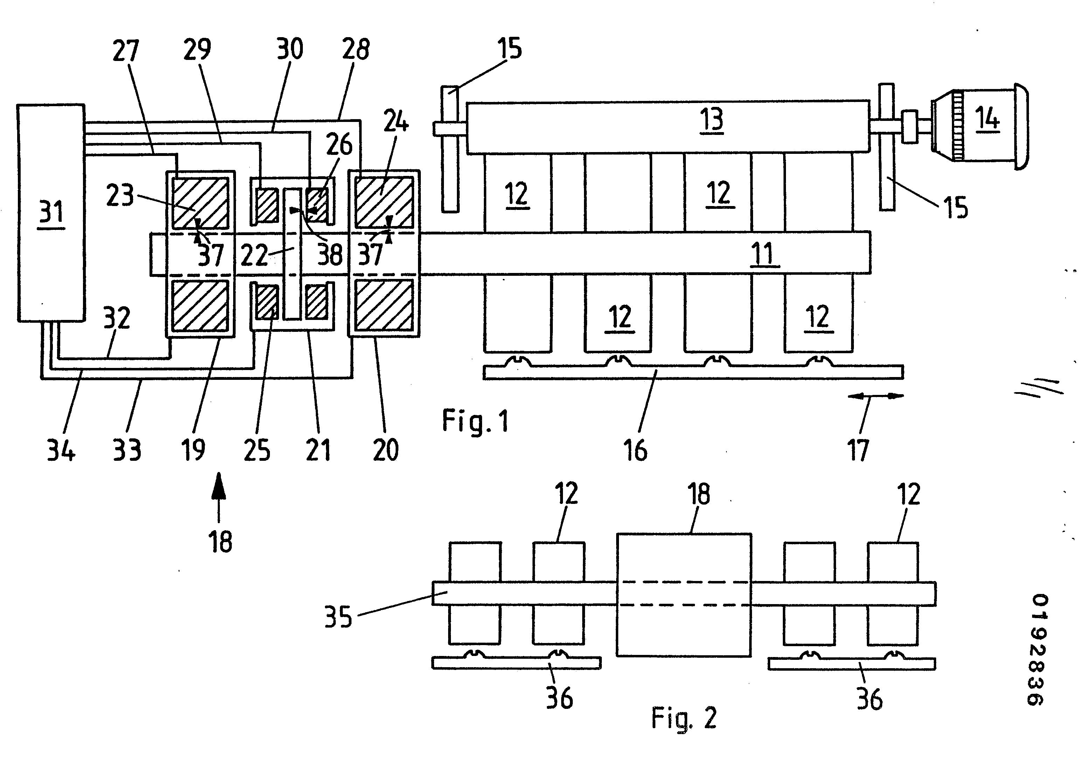

Die Fig. 1 zeigt eine Spulenträgerwelle (Dorn) 11, welche vier Spulen 12 trägt. Die Spulen 12 werden gebildet, indem Fäden auf Hülsen, welche auf die Welle 11 aufgesetzt sind, aufgespult werden. Die Hülsen sind nicht gesondert gezeichnet, sondern zusammen mit den Spulen als Einheit dargestellt. Eine Antriebswalze 13 ist an die Spulen 12 angepresst und dient dazu, diese samt der Welle 11 in Rotation zu versetzen. Zum Antreiben der Walze 13 dient ein Elektromotor 14. Da beim Aufspulen von Fäden der Durchmesser der Spulen 12 dauernd zunimmt, sind die Antriebswalze 13 und der Motor 14 als eine Einheit längs den Tragschienen 15 verschiebbar. Zum Führen der aufzuwickelnden Fäden ist ein Changierfadenführer 16 vorgesehen. Er ist im durch den Doppelpfeil 17 angegebenen Sinn bewegbar.

Die allgemein mit 18 bezeichnete Lageranordnung bildet ein Rotationslager für die Welle 11. Sie umfasst zwei Radiallager 19, 20 und ein Axiallager 21. Ausserdem ist eine fest mit der Welle 11 verbundene, zu dieser senkrechte Scheibe 22 aus magnetischem Material vorgesehen. Die Welle 11 besteht mindestens im Bereich der Lager 19, 20 aus magnetischem Material.

Die Lager 19 und 20 umfassen eine Mehrzahl von Einzelmagneten 23 und 24, deren Anordnung in der Weise getroffen ist, dass sie, seitlich aneinanderliegend, in ihrer Gesamtheit je einen die Welle 11 umschliessenden Kreisring bilden. Dabei liegen die gegen die Welle 11 hin orientierten Endflächen der Polschuhe der Magnete auf einer Zylinderfläche, welche durch einen kleinen Abstand oder Zwischenraum 37 von der Welle 11 getrennt ist. Im Betrieb wird die Welle 11 durch die Magnetfelder der Magnete 23, 24 schwebend getragen.

Um Verschiebungen der Welle 11 in ihrer axialen Richtung zu verhindern, sind die Magnete 25, 26 vorgesehen. Sie können in ihrer Gesamtheit ebenfalls zwei um die Welle 11 herum verlaufende Kreisringe bilden. Die Polschuhe der Magnete 25, 26 sind gegen die Scheibe 22 hin orientiert. Die Magnete 25, 26 werden im Betrieb in der Weise magnetisiert, dass zwischen ihnen und der Scheibe 22 auf beiden Seiten der letzteren ein schmaler Zwischenraum 38 vorhanden ist.

Die Elektromagnete 23, 24, 25 und 26 der Lager 19, 20 und 21 werden über elektrische Kabel 27, 28, 29 und 30 magnetisiert. Die Magnetisierung der Elektromagnete 23 - 26 ist veränderbar. Sie wird mittels der Steuerschaltung 31 geregelt.

Diese Regelung erfolgt im Falle der Magnete 23, 24 in Abhängigkeit der Zentrierung der Welle 11 in bezug·auf die kreisringförmig um die Welle 11 angeordneten Einzelmagnete. Die Regelung der Magnete 25, 26 wird im Zusammenhang mit der Scheibe 22 in der Weise gesteuert, dass diese stets in eine Stellung gedrückt wird, in der ihre Abstände von den Magneten 25 und 26 gleich gross sind.

Die Genauigkeit der Zentrierung der Welle 11 und der Mittellage der Scheibe 22 werden dauernd durch Sensoren überwacht und die die Abweichungen anzeigenden Signale von diesen Sensoren über die elektrischen Leitungen 32, 33 und 34 der Steuerschaltung 31 zugeführt.

Im Betrieb der Aufspulvorrichtung versetzt der Elektromotor 14 die Antriebswalze 13 in Rotation. Die an diese anliegenden Spulen 12 werden von ihr mitgenommen und zusammen mit der Welle 11 in Rotation versetzt. Dabei wird auf jede der Spulen 12 ein Faden aufgespult. Der Changierfadenführer 16 führt die Fäden in bekannter Weise, um eine gewünschte Art des Aufspulens der Fäden zu erzielen. Während des Aufspulens nehmen die Durchmesser der Spulen 12 dauernd zu. Deshalb ist die die Antriebswalze 13 und den Motor 14 umfassende Einheit längs den horizontalen Tragschienen 15 verschiebbar gelagert, wobei die Walze 13 dauernd an den Spulen 12 anliegt. Da die Länge des pro Zeiteinheit von der Spinnmaschine gelieferten Fadens konstant ist, nimmt mit zunehmendem Spulendurchmesser und bei gleichbleibender Rotationsgeschwindigkeit der Walze 13 die Rotationsgeschwindigkeit der Spulen 12 und damit auch der Welle 11 dauernd ab.

Die Welle 11 ist mittels der Elektromagnete 23,24 dauernd in einer zentrierten, schwebenden Lage gehalten. Jede Abweichung aus ihrer zentrierten, mittels Sensoren dauernd überwachten Lage wird mittels elektrischer Signale über die elektrischen Leitungen 32, 33 der Steuerschaltung 31 zugeführt. In dieser werden diese Signale verarbeitet. Dabei werden Steuersignale erzeugt, mit denen der den Einzelmagneten der Magnete 23 und 24 zugeführte Strom individuell in der Weise geregelt wird, dass jede Abweichung der Welle 11 von ihrer Soll-Position augenblicklich korrigiert wird.

In analoger Weise wird die Welle 11 in axialer Richtung in ihrer vorgeschriebenen Position gehalten. Es sind Sensoren vorgesehen, welche die Zwischenräume zwischen der Scheibe 22 und den Magneten 25 und 26 überwachen. Abweichungen von deren Sollwerten werden durch elektrische Signale über die Leitung 34 der Steuerschaltung 31 zugeführt. In dieser dienen sie zur Regelung des den Magneten 25, 26 über Kabel 29, 30 zugeführten Magnetisierungsstromes. Dabei werden die Abweichungen der Scheibe 22 von ihrem Sollwert laufend kompensiert.

Auf diese Weise rotiert die Welle 11 frei schwebend in der Lageranordnung 18, ohne irgendwie mit Teilen der Anordnung in Berührung zu kommen. Somit sind keine mechanische Reibung und kein mechanischer Verschleiss vorhanden. Da somit keine Schmierung nötig ist, existiert eine von einer solchen herrührende Verschmutzung des Fadenmaterials nicht.

Durch Variieren der Stärke der Magnetisierung der Welle 11 kann deren Steifheit variiert werden. Damit können auch die kritischen Drehzahlen verschiedener Ordnung der Welle 11 verändert bzw. verlagert werden. Dies ist von ausschlaggebender Bedeutung, weil sich dadurch die Möglichkeit für die folgende Arbeitsweise ergibt: Bei der im vorhergenden erwähnten, während des Aufspulens dauernd abnehmenden Rotationsgeschwindigkeit der Welle 11 kann die Notwendigkeit eines Durchgangs der Welle durch eine ihrer kritischen Drehzahlen notwendig sein. Es sei angenommen, dass unter den gegebenen Arbeitsverhältnissen diese kritische Drehzahl bei $n_1$ Umdrehungen pro Minute liege. Um durch diesen Wert $n_1$ durchzukommen, wird gemäss der Erfindung die Steifigkeit der Welle durch Aendern der Stärke der Magnetisierung der Welle verändert. Damit verändert, d.h. verschiebt sich die kritische Drehzahl der Welle z.B. auf den Wert $n_2$. Man kann auf diese Weise, falls dies erwünscht ist, bei der bei geänderter Magnetisierung nicht kritischen Drehzahl $n_1$ arbeiten. Will man jedoch durch die kritische Drehzahl $n_1$ durchfahren, so wird, nachdem der Wert $n_1$ überschritten und bevor der Wert $n_2$ erreicht ist, die Stärke der Magnetisierung der Welle wieder auf ihren ursprünglichen Wert zurückgebracht. Dies erfolgt in äusserst kurzer Zeit. Damit ist der Durchgang durch die sich während diesem Rückbildungs-

0192836

vorgang zwischen den Werten $n_1$ und $n_2$ befindliche kritische Drehzahl äusserst kurzzeitig. Deshalb haben die Resonanzschwingungen keine Zeit, sich auszubilden und es erfolgt der Durchgang durch die während dieser Rückbildung zwischen $n_1$ und $n_2$ liegende, kritische Drehzahl in vollkommen ungefährlicher Weise.

Gemäss der Fig. 1 sind zwei Radiallager 19, 20 und ein Axiallager 21 vorgesehen. Der gegenseitige Abstand der zwei Radiallager 19, 20 in bezug auf das Teilstück der Welle 11, über welchem sich die Spulen befinden und in bezug auf die Dicke der Welle usw., gegebenenfalls unter Berücksichtigung des Spulengewichtes, ist dabei entsprechend angepasst. Ebenso wird man die Anzahl der Radiallager den Umständen entsprechend, im allgemeinen deren zwei, wählen.

Es kann vorteilhaft sein, in bezug auf die Lageranordnung 18 gewichtsmässig ausgeglichene Verhältnisse zu schaffen. Zu diesem Zweck können, wie dies beispielsweise in Fig. 2 gezeigt ist, beidseitig der Lageranordnung 18 die gleiche Zahl von Spulen 12 angebracht werden. In diesem Fall weist die Welle 35 auf jeder Seite der Lageranordnung ein freistehendes Ende auf. Dabei kann man mit einem einzigen magnetischen Radiallager auskommen. In diesem Fall wird sich das Vorsehen von zwei Changierfadenführern als zweckmässig erweisen.

In einer Weiterentwicklung vorliegender Erfindung erfolgt der Antrieb von Welle 11 und Spulen 12 nicht, wie das in der Fig. 1 gezeigt ist, mittels eines gebräuchlichen Elektromotors 14, sondern mittels eines in der Lageranordnung 18 integrierten Elektromotors.

Patentansprüche:

1. Verwendung einer steuerbaren, magnetischen Lageranordnung mit einer rotierbaren Welle, welche Lageranordnung mindestens ein magnetisches Radiallager mit kreisringförmig angeordneten, feststehenden Elektromagneten umfasst, bei der die Welle mindestens im Bereich des Radiallagers aus magnetisierbarem Material besteht, bei der mittels der Magnete durch elektrische Ströme erzeugte Magnetfelder dazu dienen, die Welle in schwebendem Zustand zu halten, bei der eine elektronische Steuerschaltung zum Regulieren der in den Magneten fliessenden Ströme in Abhängigkeit der Positionierung der Welle im Radiallager, vorgesehen ist und bei der die Steuerschaltung zusätzlich zum Regulieren der Stärke der Magnetisierung der Welle dient, dadurch gekennzeichnet, dass die Welle als rotierbare Spulenträgerwelle (11,35) in einer Aufspulvorrichtung für den Spinnereibetrieb verwendet wird, wobei die Spulenträgerwelle (11,35) mittels auf dieser aufgesetzten Hülsen zum Aufspulen von Fäden, insbesondere endlose Chemiefasern, zu Spulen (12), dient und zum Zwecke des axialen Ueberschiebens und Wegnehmens der Hülsen bzw. Spulen (12) die Welle (11) ein freistehendes Ende hat.

2. Verwendung der Lageranordnung nach Patentanspruch 1, dadurch gekennzeichnet, dass an der Spulenträgerwelle (11) eine zu ihr senkrechte Scheibe (22) aus magnetisierbarem Material befestigt ist, dass beidseitig der Scheibe (22), ein magnetisches Axiallager bildend, ringförmig um die Welle (11) angeordnete, mit ihren Polschuhen gegen die Scheibe (22) gerichtete, feststehende Magnete (25,26) vorgesehen sind und dass die Steuerschaltung (31) auch zum Regeln der Magnetisierungsströme dieser Magnete (25,26) in Abhängigkeit der Positionierung der Scheibe (22) zwischen den Magneten (25,26), dient.

3. Verwendung der Lageranordnung nach Patentanspruch 2, dadurch gekennzeichnet, dass diese mindestens zwei magnetische Radiallager (19,20) und mindestens ein magnetisches Axiallager (21) umfasst.

4. Verwendung der Lageranordnung nach Patentanspruch 1, dadurch gekennzeichnet, dass zum Antreiben der Spulenträgerwelle (11,35) ein in der Lageranordnung (18) integrierter Elektromotor vorgesehen ist.

5. Verwendung der Lageranordnung nach Patentanspruch 1, dadurch gekennzeichnet, dass die Spulenträgerwelle (35) auf jeder Seite der Lageranordnung (18) ein freies Ende besitzt und beidseitig zur Aufnahme von Hülsen, vorzugsweise von gleicher Zahl, ausgebildet ist.

0192836

Fig.1

Fig.2

14  15  13  12  11  16  17

24  37  38  28  26  30  29  27  23  32  31  34  33  19  25  22  21  20

18

35  12  18  12  36  36